# EUROPEAN PATENT APPLICATION

(11) **EP 4 566 755 A1**
(43) Date of publication of application: **11.06.2025**
(21) Application number: 23849793.7
(22) Date of filing: 27.06.2023
(51) Int. Cl.: B24C 11/00, B24C 1/06, B24C 3/32, C01B 32/21, H01M 8/0202, H01M 8/0213, H01M 8/0221, H01M 8/0226, H01M 8/10

(54) **AIR-BLAST ABRASION MATERIAL AND FUEL CELL SEPARATOR**

(30) Priority: 04.08.2022 JP 2022124697
(71) Applicant: Nisshinbo Chemical Inc., Tokyo 103-8650 (JP)
(72) Inventor: TANNO Fumio,, Chiba-city, Chiba 267-0056 (JP); TSUKAMOTO, Kouji, Chiba-city, Chiba 267-0056 (JP); IWASAKI, Kazuyuki, Chiba-city, Chiba 267-0056 (JP)
(74) Representative: Mewburn Ellis LLP
(86) International application number: PCT/JP2023/023804
(87) International publication number: WO 2024/029234

(57) **Abstract**

Provided is an air-blast abrasion material comprising a carbon powder having a new Mohs hardness of 2.5-7.0. The air-blast abrasion material does not readily remain on the surface of an object being blasted, and therefore, little residue of the abrasion material remains on the surface of a fuel cell separator in which at least part of the surface is subjected to roughening treatment using the air-blast abrasion material.

## Description

### TECHNICAL FIELD

The present invention relates to an air-blast abrasion material and a fuel cell separator.

### BACKGROUND ART

Fuel cell separators play the role of imparting electrical conductivity to unit cells, providing flow channels for fuel and air (oxygen) supplied to the unit cells, and serving as boundary walls that separate the unit cells.

Thus, separators are required to have properties such as high electrical conductivity, high impermeability to gases, chemical stability, heat resistance, and hydrophilicity.

To provide these properties to separators, various techniques for, for example, roughening a separator surface by blasting have been developed to date.

For example, Patent Document 1 proposes a technique of attaching or embedding conductive particles, such as carbon particles, by shot blasting to or in a surface of a fuel cell separator composed of carbon particles and a thermoplastic resin to reduce the contact resistance of the surface. In this technique, since conductive fine particles are attached to or embedded in a surface resin by shot blasting, it is possible to suppress a phenomenon in which carbon particles in the separator are detached by blasting and the surface becomes resin-rich, and thus the contact resistance can be reduced. On the other hand, the conductive fine particles are detached during the assembly of the fuel cell or during electric power generation, resulting in a problem of degradation of the contact resistance.

Patent Document 2 proposes a technique of surface treatment of a fuel cell separator composed of a thermosetting resin and synthetic graphite with an alumina abrasion material. In the technique disclosed in Patent Document 2, the contact resistance is reduced by adjusting the surface of the fuel cell separator to have an average roughness of from 1.0 to 5.0 µm; however, also in this case, the alumina abrasion material attached to or embedded in the surface of the fuel cell separator is detached, resulting in a problem of contaminating other fuel cell members.

### PRIOR ART DOCUMENTS

### PATENT DOCUMENTS

Patent Document 1: JP-A 2005-332775
Patent Document 2: JP-A 2005-197222

### SUMMARY OF INVENTION

### TECHNICAL PROBLEM

The invention has been made in light of these circumstances, and an object of the invention is to provide an air-blast abrasion material that is less likely to remain on the surface of an object to be blasted and a fuel cell separator having a surface on which little residue of the abrasion material remains.

### SOLUTION TO PROBLEM

The inventors of the invention have conducted intensive studies in order to achieve the above object, and consequently found that an air-blast abrasion material composed of a carbon powder having a predetermined hardness is less likely to remain on the surface of an object to be blasted after blast processing and that a fuel cell separator that has been subjected to roughening treatment with this abrasion material has a surface on which little residue of the abrasion material remains, has good electrical conductivity, and has good adhesion to a gasket. This finding led to the completion of the invention.

Specifically, the invention provides:
1. An air-blast abrasion material composed of a carbon powder having a new Mohs hardness of from 2.5 to 7.0;
2. The air-blast abrasion material of 1 above, wherein the carbon powder is a powder of coke or anthracite;
3. The air-blast abrasion material of 1 or 2 above, wherein the air-blast abrasion material is used for surface treatment of a fuel cell separator;
4. A fuel cell separator having a surface, at least part of which is subjected to roughening treatment with the air-blast abrasion material of 3 above;
5. The fuel cell separator of 4 above, wherein at least part of a surface of a molded product of a composition including a graphite powder and an epoxy resin component containing a base resin, a curing agent, and a curing accelerator is subjected to roughening treatment with the air-blast abrasion material;
6. The fuel cell separator of 4 above, wherein the surface subjected to the roughening treatment has an arithmetical mean height Sa of from 0.5 to 1.5 µm;
7. The fuel cell separator of 4 above, wherein the number of residues of the abrasion material with a particle size of from 50 to 400 µm remaining on the surface subjected to the roughening treatment is 500 or less, as measured by direct/indirect measurement of VDA19.2;
8. The fuel cell separator of 4 above, wherein the surface subjected to the roughening treatment has a contact resistance of 7 mΩ·cm or less; and
9. A fuel cell separator including a molded product of a composition including a graphite powder and an epoxy resin component containing a base resin, a curing agent, and a curing accelerator, the molded product having a surface, at least part of which is subjected to roughening treatment with an abrasion material,
   wherein the number of residues of the abrasion material with a particle size of from 50 to 400 µm remaining on the surface subjected to the roughening treatment is 500 or less, as measured by direct/indirect measurement of VDA19.2, and
   the surface subjected to the roughening treatment has an arithmetical mean height Sa of from 0.5 to 1.5 µm.

### ADVANTAGEOUS EFFECTS OF INVENTION

The air-blast abrasion material according to the invention is composed of a carbon powder having a predetermined hardness, and thus has a property of being less likely to remain on the surface of an object to be blasted during blast processing.

The fuel cell separator subjected to roughening treatment with this air-blast abrasion material has a surface on which a residue of the abrasion material does not remain, and has good electrical conductivity and good adhesion to a gasket.

### DESCRIPTION OF EMBODIMENTS

The invention will be described in more detail below.

### [1] Air-Blast Abrasion Material

An air-blast abrasion material according to the invention is composed of a carbon powder having a new Mohs hardness of from 2.5 to 7.0. The new Mohs hardness is an index of hardness defined by reclassifying the Mohs hardness index, which is a 10-level hardness standard, into a more detailed 15-level hardness scale and is also referred to as a modified Mohs hardness.

In the invention, if the new Mohs hardness is outside the range described above, the air-blast abrasion material is likely to remain on the surface of an object to be blasted, and in the case of using the abrasion material as an air-blast abrasion material for a fuel cell separator, the contact resistance of the surface subjected to roughening treatment does not sufficiently decrease, and adhesion to a gasket is insufficient.

The new Mohs hardness is preferably in the range of from 2.5 to 6.0, more preferably from 2.5 to 5.5, still more preferably from 2.5 to 5.0.

The carbon powder is not particularly limited, so long as the above new Mohs hardness is satisfied. In the invention, examples thereof include coal, charcoal, anthracite, glassy carbon, and coke. Of these, anthracite and coke are preferred, and coke is more preferred.

An average particle size (d = 50) of the air-blast abrasion material according to the invention is not particularly limited, so long as it is within a range of the average particle size of a typical abrasion material, but is preferably from 50 to 400 µm, more preferably from 55 to 300 µm, still more preferably from 58 to 200 µm, still further more preferably from 60 to 190 µm considering that the air-blast abrasion material is used as an abrasion material for surface treatment of a fuel cell separator.

### [2] Fuel Cell Separator

A fuel cell separator according to the invention is obtained by subjecting at least part of a surface of a molded product of a fuel cell separator composition to roughening treatment with the air-blast abrasion material described above.

In the invention, the fuel cell separator composition can be appropriately selected from publicly known compositions used in the production of a fuel cell separator. For example, a composition including a graphite powder and an epoxy resin component containing a base resin, a curing agent, and a curing accelerator can be suitably used.

The graphite powder is not particularly limited, and either natural graphite or synthetic graphite may be used.

Synthetic graphite powders suitably selected from among those that have hitherto been used in fuel cell separators may be used. Specific examples thereof include synthetic graphite obtained by firing needle coke and synthetic graphite obtained by firing lump coke.

Similarly, natural graphite powders suitably selected from among those that have hitherto been used in fuel cell separators may be used. Specific examples thereof include vein natural graphite and flake natural graphite.

These graphite powders may be used alone or in combination of two or more thereof.

An average particle size d50 of the graphite powder is not particularly limited, but is preferably from 10 to 200 µm, more preferably from 15 to 140 µm, still more preferably from 20 to 80 µm, considering that the electrical conductivity is increased (the contact resistance is reduced).

The average particle size d50 in the invention is expressed as the median diameter in particle size distribution measurement by the laser diffraction method.

The base resin constituting the epoxy resin component is not particularly limited, provided that it has epoxy groups. Examples thereof include o-cresol novolac-type epoxy resins, phenol novolac-type epoxy resins, bisphenol A-type epoxy resins, bisphenol F-type epoxy resins, biphenyl-type epoxy resins, biphenyl aralkyl-type epoxy resins, trisphenol-type epoxy resins, brominated epoxy resins, dicyclopentadiene-type epoxy resins, and biphenyl novolac-type epoxy resins. These may be used alone or in combination of two or more thereof. Of these, an o-cresol novolac-type epoxy resin alone, a biphenyl-type epoxy resin alone, or mixtures of these are preferred.

The epoxy equivalent weight of the epoxy resin used in the invention is not particularly limited, but is preferably from 180 to 209 g/eq.

The curing agent is preferably a phenolic resin. Specific examples thereof include novolac-type phenolic resins, cresol novolac-type phenolic resins, resole-type phenolic resins, aralkyl-modified phenolic resins, biphenyl novolac-type phenolic resins, and trisphenol methane-type phenolic resins. These may be used alone or in combination of two or more thereof. Of these, a novolac-type phenolic resin is preferred.

The hydroxyl equivalent weight of the phenolic resin used in the invention is not particularly limited, but is preferably from 95 to 140 g/eq, more preferably from 100 to 115 g/eq.

The curing accelerator is not particularly limited, so long as it is an agent which promotes reactions between epoxy groups and the curing agent. Examples thereof include phosphine compounds, amine compounds, and imidazole compounds. Of these, the use of an imidazole compound having an aryl group at the 2-position is preferred. Specific examples of the aryl group include phenyl, tolyl, and naphthyl groups; a phenyl group is preferred. Specific examples of imidazole compounds having an aryl group at the 2-position include 2-phenylimidazole and 2-phenyl-4-methylimidazole.

In addition to the above ingredients, optional ingredients such as an internal mold release agent may be included as appropriate in the composition used in the invention.

The internal mold release agent is suitably selected from various types of internal mold release agents that have hitherto been used in molding of separators. Specific examples thereof include stearic acid wax, amide wax, montanic acid wax, carnauba wax, and polyethylene wax. These may be used alone or in combination of two or more thereof.

The amount of epoxy resin component (base resin, curing agent, and curing accelerator) included in the composition used in the invention is not particularly limited, but is preferably from 10 to 50 parts by weight, more preferably from 20 to 40 parts by weight, per 100 parts by weight of the graphite powder.

In this case, the curing agent is preferably included in an amount of from 0.98 to 1.08 equivalents, more preferably from 0.99 to 1.05 equivalents with respect to the base resin.

The amount of curing accelerator used is not particularly limited, but is preferably from 0.1 to 5 parts by weight, more preferably from 0.5 to 2 parts by weight, per 100 parts by weight of the mixture of the base resin and the curing agent.

In addition, when an internal mold release agent is used, the amount thereof is not particularly limited, but is preferably from 0.01 to 3.0 parts by weight, more preferably from 0.05 to 1.5 parts by weight, per 100 parts by weight of the graphite powder.

The composition used in the invention may be prepared by, for example, mixing together the graphite powder, the base resin, the curing agent, and the curing accelerator in any order and in predetermined ratios. The mixer used at this time may be, for example, a planetary mixer, a ribbon blender, a Loedige mixer, a Henschel mixer, a rocking mixer, or a Nauta mixer.

When an internal mold release agent is used, the order of blending of the internal mold release agent is also not limited.

The composition may be placed in a predetermined mold and subjected to compression molding to obtain a molded body (separator precursor). The mold used may be a mold for fuel cell separator production, the mold being capable of forming grooves that serve as gas flow channels at one or both surfaces of the molded body.

The compression molding conditions are not particularly limited, but the mold temperature is from 150°C to 190°C, and the molding pressure is from 30 to 60 MPa, preferably from 30 to 50 MPa.

The compression molding time is not particularly limited, but may be suitably set to about three seconds to about one hour.

After compression molding, heating may be further performed at 150°C to 200°C for about 1 minute to about 600 minutes in order to accelerate thermal curing.

In the invention, the obtained molded body (fuel cell separator precursor) is subjected to roughening treatment with the air-blast abrasion material according to the invention.

In this case, the above-described air-blast abrasion materials may be used alone to perform the roughening treatment, or may be used in combination of two or more thereof to perform the roughening treatment.

The discharge pressure during air blast processing varies depending on, for example, the particle size of the abrasion material and thus cannot be unconditionally specified, but the discharge pressure is preferably from 0.1 to 1 MPa, more preferably from 0.15 to 0.5 MPa.

The transport speed during air blast processing also cannot be unconditionally specified, but is preferably from 0.1 to 5 m/min, more preferably from 0.3 to 2 m/min, still more preferably from 0.5 to 1.5 m/min.

Part of a surface or the entire surface of the molded body may be subjected to the roughening treatment, but the entire surface is preferably subjected to the roughening treatment. One surface or both surfaces may be subjected to the roughening treatment.

When part of the molded body is subjected to the roughening treatment, at least a surface of a seal portion with a gasket and bottom surfaces and peak portions of grooves serving as gas flow channels at one surface are preferably subjected to the roughening treatment.

The fuel cell separator according to the invention that has been subjected to the roughening treatment has a feature that little residue of the abrasion material remains on the surface subjected to the roughening treatment and has a feature that, for example, the number of residues of the abrasion material with a particle size of from 50 to 400 µm remaining on the surface subjected to the roughening treatment is 500 or less, preferably 400 or less, more preferably 300 or less, as measured by direct/indirect measurement of VDA19.2. In the invention, the above number of particles refers to a total amount determined using a surface cleanliness particle monitor in accordance with the direct/indirect measurement of VDA19.2 by collecting the adhering abrasion material from three positions randomly selected on the surface subjected to the roughening treatment with a tape lift pad dedicated for the monitor, and counting the number of particles with a size of from 50 to 400 µm. For example, in a fuel cell separator having a gas flow channel portion, a seal portion, and a cooling flow channel portion, the abrasion material adhering to the surface is collected, with the tape lift pad, from one position of the gas flow channel portion, one position of the seal portion, and one position of the cooling flow channel portion, and the number of particles with a size of from 50 to 400 µm is counted.

In the fuel cell separator according to the invention, an arithmetical mean height Sa of the surface subjected to the roughening treatment is preferably from 0.5 to 1.5 µm, more preferably 0.6 to 1.5 µm from the viewpoint of reducing the contact resistance.

The contact resistance of the surface subjected to the roughening treatment is preferably 7.0 mΩ·cm or less, more preferably 6.5 mΩ·cm or less. Note that the contact resistance is preferably as low as possible; however, the lower limit value is typically about 3.0 mΩ·cm.

Moreover, the fuel cell separator according to the invention that has been subjected to the roughening treatment also has a feature of having good adhesion to a gasket because little residue of the abrasion material remains on the surface subjected to the roughening treatment.

The gasket is typically formed on a peripheral portion (seal portion) of a surface of the molded body subjected to the roughening treatment, the surface having grooves serving as gas flow channels.

In the invention, the material of the gasket is suitably selected from among those that have hitherto been used as gasket materials of separators. Specific examples thereof include rubber materials such as natural rubber, silicone rubber, SIS copolymers, SBS copolymers, SEBS, ethylene-propylene rubber, ethylene-propylene-diene rubber, acrylonitrile-butadiene rubber, hydrogenated acrylonitrile-butadiene rubber, chloroprene rubber, acrylic rubber, fluororubber, butyl rubber, hydrogenated isobutylene rubber, and hydrogenated butadiene rubber.

Examples of the method for forming the gasket include a method in which a gasket formed into a sheet or plate shape in advance is bonded or fusion-bonded to the peripheral portion (seal portion) of the molded body, and a method in which a composition including the above rubber material is applied to the surface of the peripheral portion of the molded body, and then cured to form a gasket. The latter method, in which curing is performed after application, is preferred.

Examples of the application method include, but are not particularly limited to, a drop casting method, a spin coating method, a blade coating method, a roll coating method, a bar coating method, a die coating method, an ink jet method, and printing methods (such as flexography, gravure printing, planography, and screen printing). The printing methods are preferred, and screen printing is more preferred.

The curing method is suitably selected from publicly known vulcanization methods such as heating and irradiation with radiation such as an electron beam.

In a separator which has grooves in both surfaces and whose both surfaces serve as gas flow channel surfaces, gaskets may be formed on each of the surfaces. In a separator having a gas flow channel surface on one side, when the opposing surface (cooling surface) is also required to have a sealing property, a gasket may be formed as required on the peripheral portion of the cooling surface. In the case where gaskets are formed on both surfaces, a gasket may be sequentially formed on each of the surfaces, or the gaskets may be formed on both surfaces at the same time.

A fuel cell including the fuel cell separator according to the invention having good adhesion to a gasket can maintain stable power generating efficiency for a long period of time.

In general, a solid polymer fuel cell is composed of a large number of unit cells arranged in parallel, the unit cells each including a solid polymer membrane disposed between a pair of electrodes, and a pair of separators that sandwich the electrodes to form flow channels for supplying/discharging gases. The fuel cell separator according to the invention may be used as some or all of the plurality of separators.

### EXAMPLES

The invention will be more specifically described below by way of Examples and Comparative Examples; however, the invention is not limited to the following Examples. The properties in Examples were measured by the following methods.

### [1] Average Particle Sizes d50 of Graphite Powder and Air-Blast Abrasion Material

The median diameter was measured by the laser diffraction method using a particle size distribution analyzer (MT3000, available from Nikkiso Co., Ltd.).

### [2] Arithmetical Mean Height Sa

For surfaces of a bottom portion (recess) and a peak portion (projection) of a gas flow channel groove of each separator sample before formation of a gasket, the arithmetical mean height Sa specified in ISO 25178-2:2012 was measured using a laser microscope (LEXT OLS5000, available from Olympus Corporation).

### [3] Contact Resistance

### (1) Carbon Paper + Separator Sample

For each separator sample before formation of a gasket, two separator samples were superimposed on top of each other, carbon paper (TGP-H060, available from Toray Industries, Inc.) was disposed on each of the upper and lower sides of the separator samples, and copper electrodes were further disposed on the upper and lower sides of the resulting stack. A surface pressure of 1 MPa was applied in the upward and downward directions, and the voltage was measured by the four-probe method.

### (2) Carbon Paper

Copper electrodes were disposed on the upper and lower sides of carbon paper. A surface pressure of 1 MPa was applied in the upward and downward directions, and the voltage was measured by the four-probe method.

### (3) Method for Calculating Contact Resistance

Voltage drops of the separator sample and the carbon paper were determined from the voltage values determined in (1) and (2) above, and the contact resistance was calculated.

### [4] Number of Residues of Abrasion Material (Number of Particles)

A surface cleanliness particle monitor (PartSens, available from Intechno) in accordance with the direct/indirect measurement of VDA19.2 was used to collect, with a tape lift pad dedicated for the monitor, the abrasion material adhering to a surface at one position of the gas flow channel portion, one position of the seal portion, and one position of the cooling flow channel portion of a separator before the formation of a gasket, and the number of particles with a size of from 50 to 400 µm was determined. The values in the table below each represent the total amount of abrasion material particles adhering to the gas flow channel, the seal portion, and the cooling flow channel portion.

### [5] Separation of Gasket

Air at 0.2 MPa was blown onto a seal (gasket) bonded to a separator for two seconds, and the occurrence or non-occurrence of separation was evaluated by visual observation.

### [Example 1]

A composition was prepared by charging a Henschel mixer with 100 parts by weight of a graphite powder (synthetic graphite, average particle size d50: 23 µm; average height: 8 µm) and an epoxy resin component containing 20.4 parts by weight of an epoxy resin (an o-cresol novolac-type epoxy resin, epoxy equivalent weight: 198 g/eq), 10.7 parts by weight of a phenolic resin (a novolac-type phenolic resin, hydroxyl equivalent weight: 103 g/eq), and 0.25 parts by weight of 2-phenylimidazole, and mixing these ingredients together for three minutes at 800 rpm.

The resulting composition was charged into a mold for producing a fuel cell separator and compression-molded at a mold temperature of 185°C, a molding pressure of 36.6 MPa, and a molding time of nine seconds, thereby providing a molded body having dimensions of 240 mm × 240 mm × 2 mm and having gas flow channel grooves.

Next, the entire surface of the resulting molded body was subjected to roughening treatment by air blasting using a coke abrasion material (new Mohs hardness: 4.5, average particle size: d50 = 180 µm) under conditions of a discharge pressure of 0.25 MPa and a transport speed of 1.5 m/min, thereby obtaining a fuel cell separator.

Subsequently, ethylene-propylene-diene rubber was applied to a peripheral portion (seal portion) of the surface subjected to the roughening treatment by a screen printing method and then vulcanized by heating at 175°C for 30 minutes to form a gasket, thereby obtaining a fuel cell separator with a gasket.

### [Example 2]

A fuel cell separator with a gasket was obtained as in Example 1 except that the coke abrasion material was changed to an anthracite abrasion material (new Mohs hardness: 2.7, average particle size: d50 = 60 µm).

### [Comparative Example 1]

A fuel cell separator with a gasket was obtained as in Example 1 except that the coke abrasion material was changed to a melamine resin abrasion material (new Mohs hardness: 4.0, average particle size: d50 = 200 µm).

### [Comparative Example 2]

A fuel cell separator with a gasket was obtained as in Example 1 except that the coke abrasion material was changed to an acrylic resin abrasion material (new Mohs hardness: 3.5, average particle size: d50 = 150 µm).

### [Comparative Example 3]

A fuel cell separator with a gasket was obtained as in Example 1 except that the coke abrasion material was changed to a glass powder abrasion material (new Mohs hardness: 6.5, average particle size: d50 = 100 µm).

### [Comparative Example 4]

A fuel cell separator with a gasket was obtained as in Example 1 except that the coke abrasion material was changed to a dry ice abrasion material (new Mohs hardness: 2.0, average particle size: d50 = 3,000 µm).

### [Comparative Example 5]

A fuel cell separator with a gasket was obtained as in Example 1 except that the coke abrasion material was changed to a natural graphite abrasion material (new Mohs hardness: 1.5, average particle size: d50 = 50 µm).

### [Comparative Example 6]

A fuel cell separator with a gasket was obtained as in Example 1 except that the coke abrasion material was changed to an alumina abrasion material (new Mohs hardness: 12, average particle size: d50 = 60 µm).

### [Comparative Example 7]

A fuel cell separator with a gasket was obtained as in Example 1 except that the coke abrasion material was changed to a zirconia abrasion material (new Mohs hardness: 7.5, average particle size: d50 = 60 µm).

### [Comparative Example 8]

A fuel cell separator with a gasket was obtained as in Example 1 except that the coke abrasion material was changed to a silicon carbide abrasion material (new Mohs hardness: 12, average particle size: d50 = 60 µm).

For the fuel cell separators before the formation of the gasket, the fuel cell separators being obtained in Examples 1 and 2 and Comparative Examples 1 to 8 above, the arithmetical mean height Sa, the contact resistance, and the number of residues of the abrasion material were measured and evaluated. For the fuel cell separators with the gasket, separation of the gasket was evaluated. The results are shown in Table 1.

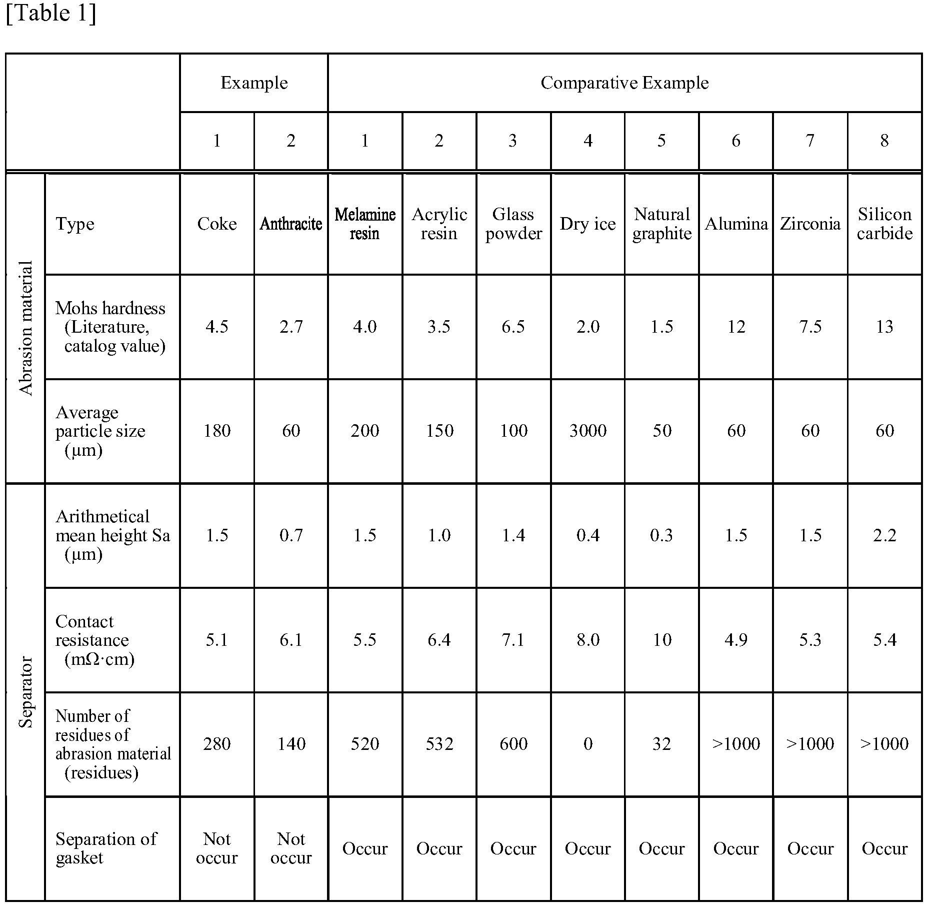

As shown in Table 1, in the fuel cell separators of Examples 1 and 2, which were subjected to air blast processing with a carbon powder having a new Mohs hardness of from 2.5 to 7.0, the number of residues of the abrasion material with a particle size of from 50 to 400 µm on the surfaces is 500 or less, and the arithmetical mean height Sa is adjusted to 0.5 to 1.5 µm; therefore, the fuel cell separators have a good contact resistance, and the separation of the gasket does not occur.

In contrast, in the separators obtained in Comparative Examples 1 to 3, which were subjected to air blast processing with the melamine resin, the acrylic resin, or the glass powder, the charged abrasion material adheres to the surfaces of the separators, and consequently, the residue remains in a large amount, resulting in poor adhesion of the gasket.

In the separators obtained in Comparative Examples 4 and 5, which were subjected to air blast processing with dry ice or natural graphite, although less residue of the abrasion material remains, the new Mohs hardness is low, the arithmetical mean height Sa is small, and the contact resistance does not decrease sufficiently.

In the separators obtained in Comparative Examples 6 to 8, which were subjected to air blast processing with alumina, zirconia, or silicon carbide, the abrasion material adheres to and is embedded in the separators, and consequently, the residue remains in a large amount, resulting in poor adhesion of the gasket.

## Claims

1. An air-blast abrasion material comprising a carbon powder having a new Mohs hardness of from 2.5 to 7.0.

2. The air-blast abrasion material according to claim 1, wherein the carbon powder is a powder of coke or anthracite.

3. The air-blast abrasion material according to claim 1 or 2, wherein the air-blast abrasion material is used for surface treatment of a fuel cell separator.

4. A fuel cell separator comprising a surface, at least part of which is subjected to roughening treatment with the air-blast abrasion material according to claim 3.

5. The fuel cell separator according to claim 4, wherein at least part of a surface of a molded product of a composition including a graphite powder and an epoxy resin component containing a base resin, a curing agent, and a curing accelerator is subjected to roughening treatment with the air-blast abrasion material.

6. The fuel cell separator according to claim 4, wherein the surface subjected to the roughening treatment has an arithmetical mean height Sa of from 0.5 to 1.5 µm.

7. The fuel cell separator according to claim 4, wherein the number of residues of the abrasion material with a particle size of from 50 to 400 µm remaining on the surface subjected to the roughening treatment is 500 or less, as measured by direct/indirect measurement of VDA19.2.

8. The fuel cell separator according to claim 4, wherein the surface subjected to the roughening treatment has a contact resistance of 7 mΩ·cm or less.

9. A fuel cell separator comprising a molded product of a composition including a graphite powder and an epoxy resin component containing a base resin, a curing agent, and a curing accelerator, the molded product having a surface, at least part of which is subjected to roughening treatment with an abrasion material,
wherein the number of residues of the abrasion material with a particle size of from 50 to 400 µm remaining on the surface subjected to the roughening treatment is 500 or less, as measured by direct/indirect measurement of VDA19.2, and
the surface subjected to the roughening treatment has an arithmetical mean height Sa of from 0.5 to 1.5 µm.
